# FASCICULE DE BREVET EUROPEEN

(11) **EP 0 308 280 B1**
(45) Date de publication et mention de la délivrance du brevet: **26.01.1994**
(21) Numéro de dépôt: 88402073.6
(22) Date de dépôt: 10.08.1988
(51) Int. Cl.: C08J 5/06, C08L 23/02

(54) **Matériaux composites à matrice polyoléfinique et procédé d'obtention**
Verbundmaterialien aus Polyolefinmatrix und Verfahren zu deren Herstellung
Composite materials with polyolefin matrix and process for preparing them

(30) Priorité: 18.09.1987 FR 8713012
(43) Date de publication de la demande: 22.03.1989
(73) Titulaire: Landler, Yvan, F-92330 Sceaux (FR)
(72) Inventeur: Landler, Yvan, F-92330 Sceaux (FR)

(56) Documents cités:
- EP-A- 0 201 367
- WO-A-86/05445
- FR-A- 1 234 921
- US-A- 3 628 992
- US-A- 3 936 415

## Description

L'invention concerne le domaine des matériaux composites, aujourd'hui utilisés dans un très grand nombre d'applications industrielles, c'est-à-dire au domaine des matériaux comportant une matrice polymérique incluant un élément de renforcement.

L'invention se rapporte, plus particulièrement, aux composites à matrice polyoléfinique.

Les matériaux composites connaissent, depuis de nombreuses années, un essor considérable, dans tous les domaines industriels, car les matrices polymériques présentent - outre une facilité de mise en formes complexes - des caractéristiques intéressantes pour un coût modéré, sous réserve que leurs propriétés mécaniques soient accrues par l'incorporation d'un matériau de renforcement, soit sous forme de charge minérale ou organique (tel le noir de carbone dans les matrices élastomériques) soit sous forme de renforcement - continu ou discontinu - constitué à partir de fils textiles ou métalliques, en matrices élastomériques également (comme, par exemple, dans les pneumatiques, les tuyaux ou les bandes transporteuses) soit en matrices thermodurcissables (par exemple les ressorts de suspension pour automobiles à matrice époxy ou les composites de haute technologie pour les applications aérospatiales).

Il est quasiment impossible - vu l'abondance des publications sur le sujet - de dresser un état de l'art antérieur pour les composites à matrices élastomériques ou thermodurcissables.

Par contre, on peut remarquer que l'on ne trouve pratiquement pas de références relatives aux composites à matrices polyoléfiniques, ce qui s'explique par la nature chimique de ces matériaux, tels le polyéthylène, le polypropylène ou leurs copolymères semi-cristallins.

Ces polymères présentent, en effet, une grande inertie chimique et, par conséquent, une absence d'affinité pour d'autres matériaux, rendant impossible une adhérence entre les matrices polyoléfiniques et les renforcements autres que polyoléfiniques eux-mêmes (comme illustré dans le brevet américain 4.501.856 d'ALLIED Corp.), sans traitement ou modification chimique - souvent complexe à mettre en oeuvre - des polyoléfines, comme décrit, par exemple, dans le brevet américain 3.936.415 d'OWENS-CORNING FIBERGLAS Corp qui utilise une polyoléfine oxydée.
Le document W086/05445 de DOW décrit des matériaux constitués par une matrice en une matière plastique quelconque et par des éléments de renforcement tels que des textiles, une couche d'élastomère étant liée à l'élément de renforcement textile afin de conférer aux matériaux composites des propriétés améliorées. Cette technique ne permet, cependant, pas d'obtenir des composites présentant des caractéristiques performantes, avec une matrice polyoléfinique, l'adhérence entre les constituants s'avérant insuffisante.

L'invention a donc pour objectif d'apporter une solution aux problèmes d'affinité entre les polyoléfines - rendues ainsi aptes à constituer des matrices - et les éléments de renforcement, pour réaliser des composites de haute compétitivité économique, en raison du faible coût des polyoléfines, matériaux de grande consommation. Pour ce faire, il est évident que des solutions simples, ne nécessitant pas de transformation chimique complexe et onéreuse du polymère doivent être recherchées.

L'objet de l'invention est donc un composite à matrice polyoléfinique comportant un élément de renforcement intimement lié à ladite matrice.
Un autre objet de l'invention est le procédé et ses variantes qui permettent l'obtention d'un tel composite, par des moyens simples et peu onéreux.

Le composite objet de l'invention est formé d'une matrice(1) constituée d'une polyoléfine de masse moléculaire quelconque, telle que du polyéthylène haute ou basse densité, linéaire ou ramifié, du polypropylène, un homologue supérieur de polyoléfine ou un de leurs copolymères semi-cristallins, et un renforcement (2) constitué de matériaux textiles naturels, artificiels ou synthétiques, ou de matériaux métalliques, sous forme continue, telle que des retors, des câblés, du trisot ou du tissu, ou sous forme discontinue, telle que des fibres courtes, du feutre ou du nontissé, (dans la suite de l'exposé, cet élément sera dénommé "renforcement"), enrobé d'au moins, une couche d'adhérisation (3), dont l'une au moins comporte un composant élastomérique.

Ledit matériau composite est caractérisé on ce qu'une liaison intime est assurée entre la matrice polyoléfinique (1) et le renforcement (2) adhérisé par l'intermédiaire d'un enrobage (5), de faible épaisseur, du renforcement adhérisé par une polyoléfine telle que du polyéthylène ou du polypropylène, de masse moléculaire moyenne on poids au moins égale à 500.000.

Le procédé de réalisation du composite, objet de l'invention, dont le renforcement a reçu, avant incorporation dans la matrice, une couche d'adhérisation comportant au moins un composant élastomérique, ( défini, dans la suite de l'exposé, par le "renforcement adhérisé") est caractérisé en ce que ladite composition d'adhérisation est revêtue, au cours d'un traitement thermique, par une polyoléfine, telle que du polyéthylène ou du propropylène, de masse moléculaire moyenne en poids au moins égale à 500.000.

Des modes particuliers de l'invention sont décrits par les revendications 2 et 3.

L'opération dite "traitement d'adhérisation" peut se faire, par exemple, par passage du renforcement dans une solution de résine époxy, une suspension aqueuse ternaire de résorcine, de formol et d'un latex d'élastomère ou de phénol, de formol et de latex, une dissolution, dans un solvant approprié d'une composition élastomérique de formulation adaptée pour favoriser l'adhérence au renforcement; d'autres techniques de réalisation du traitement d'adhérisation consistent à opérer un revêtement, par extrusion de la couche d'adhérisation sur le renforcement, par enduction du renforcement ou encore par dépot d'un film mince de composition élastomérique sur le renforcement, au cours d'une confection sur mandrin ou dans un moule, par exemple.

Le revêtement du renforcement adhérisé par une polyoléfine de haute masse moléculaire (au moins égale à 500.000) est réalisé, généralement, par passage dudit renforcement adhérisé dans une dissolution de la polyoléfine dans un solvant approprié, tel que la décaline, ou dans un lit fluidisé constitué par une suspension de ladite polyoléfine de haute masse moléculaire dans un flux gazeux, préférentiellement d'air ou d'azote; cette opération conduit à l'obtention d'un "renforcement adhérisé enrobé de polyoléfine";
L'incorporation du renforcement adhérisé enrobé de polyoléfine, sous forme d'éléments continus ou discontinus, dans la matrice polyoléfinique, constituée de polyéthylène, de polypropylène, des homologues supérieurs de polyoléfines ou encore de leurs copolymères semi-cristallins, est réalisée par les moyens utilisés de manière classique dans l'industrie de transformation des polymères, par exemple par mélangeage intime du renforcement adhérisé enrobé de polyoléfine à la matrice polyoléfinique, au sein d'un mélangeur à cylindres ou d'un mélangeur interne, s'il s'agit d'un renforcement discontinu, ou par enroulement filamentaire, d'abord du renforcement adhérisé enrobé de polyoléfine, puis d'une feuille de polyoléfine sur un mandrin pour la réalisation du composite à renforcement continu; cette opération conduit à l'obtention du composite semi-produit, qui sera transformé en produit fini par une opération de moulage utilisée de manière habituelle dans l'industrie de transformation des polymères et permettra une liaison intime entre la polyoléfine de haute masse moléculaire qui constitue l'enrobage du renforcement adhérisé et la polyoléfine de masse moléculaire quelconque qui constitue la matrice.

D'autres traitements complémentaires peuvent être appliqués, par exemple, pour améliorer l'adhérence du renforcement adhérisé à la matrice polyoléfinique. Ce sont, à titre d'exemples non limitatifs, l'enrobage du renforcement adhérisé par une fine couche de composition élastomérique qui pourra être, éventuellement, partiellement vulcanisée par un traitement thermique approprié, le ravivage de la surface du renforcement adhérisé ou encore un traitement thermique de la polyoléfine d'enrobage du renforcement adhérisé.

Les détails et variantes de l'invention seront mieux compris à la lecture des dessins et des exemples ci-après dans lesquels :
- la figure 1 représente, schématiquement, en coupe transversale au niveau du renforcement, la constitution d'un composite type à renforcement continu,
- la figure 2 représente, schématiquement, en coupe longitudinale au niveau du renforcement, la constitution d'un composite type à renforcement discontinu,
- la figure 3 est une coupe agrandie de la figure 2, dans la zone AA', représentant trois éléments du renforcement discontinu,
- la figure 4 schématise l'ensemble des traitements -dont certains sont optionnels ou non nécessaires selon la nature et la forme du renforcement- qui constituent le procédé de réalisation du composite et ses variantes, par combinaison de tout ou partie des opérations élémentaires.
et, parmi les exemples,
- les compositions C1, C2 et C9 définissent des exemples de constitution de composites à renforcement continu pour les compositions C1 et C2 et discontinu pour la composition C9, ledit renforcement étant constitué d'une fibre artificielle, la rayonne ou la fibranne ;
- les procédés P1, P2 et P9 définissent, à titre d'exemples non limitatifs, l'ensemble des traitements appliqués au renforcement à base de rayonne ou de fibranne pour obtenir des composites conformes aux compositions C1, C2 et C9;
- les compositions C3, C5 et C10 définissent des exemples de constitution de composites à renforcement continu pour les compositions C3 et C5 et discontinu pour la composition C10, ledit renforcement étant constitué de fibres synthétiques, polyamide et polyester ;
- les procédés P3, P5 et P10 définissent, à titre d'exemples non limitatifs, l'ensemble des traitements appliqués au renforcement à base de polyamide ou de polyester pour obtenir des composites conformes aux compositions C3, C5 et C10;
- les compositions C4 et C11 définissent des exemples de constitution de composites à renforcement continu pour la composition C4 et discontinu pour la composition C11, ledit renforcement étant constitué d'une fibre synthétique à haut module, l'aramide;
- les procédés P4 et P11 définissent, à titre d'exemples non limitatifs, l'ensemble des traitements appliqués au renforcement à base d'aramide pour obtenir des composites conformes aux compositions C4 et C11;
- les compositions C6 et C12 définissent des exemples de constitution de composites à renforcement continu pour la composition C6 et discontinu pour la composition C12, ledit renforcement étant constitué d'une fibre minérale, le verre;
- les procédés P6 et P12 définissent, à titre d'exemples non limitatifs, l'ensemble des traitements appliqués au renforcement à base de fibre de verre pour obtenir des composites conformes aux compositions C6 et C12;
- les compositions C7 et C8 définissent des exemples de constitution de composites à renforcement continu constitué de cable d'acier laitonné;
- les procédés P7 et P8 définissent, à titre d'exemples non limitatifs, l'ensemble des traitements appliqués au renforcement à base de cables d'acier laitonné pour obtenir des composites conformes aux compositions C7 et C8;

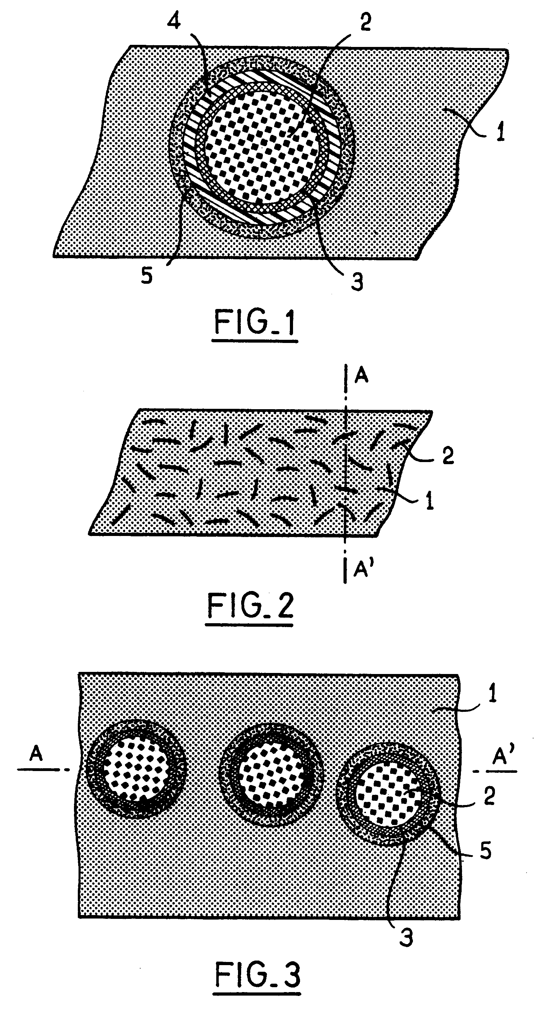

La figure 1 représente, schématiquement, en coupe transversale au niveau du renforcement, la constitution d'un composite type à renforcement continu, constitué de fils, de fibres ou de cablés textiles (y compris le verre) ou métalliques, soit sous forme linéaire, soit sous forme d'associations en tricot, ou en tissu, par exemple. Quelle que soit la forme du renforcement, la coupe est opérée au niveau d'une fibre élémentaire noyée dans une matrice polyoléfinique (1), la fibre (2) étant enrobée d'une couche fine (3) par rapport au diamètre de la fibre elle-même, d'une composition d'adhérisation qui peut être constituée par une résine époxy, un polycondensat ternaire de résorcine, de formol et de latex élastomérique ou d'une composition formophénolique et de latex, puis d'une seconde couche fine (4) d'une composition élastomérique de formulation adaptée, d'une part à l'adhérence avec la composition d'adhérisation, d'autre part aux traitements thermiques successifs nécessaires à l'obtention du composite. C'est ainsi, par exemple, que la composition élastomérique d'enrobage de la fibre comportera, avantageusement, des additifs retardateurs de la vulcanisation, afin de lui permettre de subir, sans se réticuler complètement, le traitement thermique qui assurera son adhérence au renforcement. Par dessus la composition élastomérique (4) d'enrobage du renforcement (2) se trouve une fine couche de revêtement (5), constituée de polyoléfine de haute masse moléculaire telle que, préférentiellement, du polyéthylène ou du polypropylène.
La figure 2 représente, schématiquement, en coupe longitudinale au niveau du renforcement, la constitution d'un composite type à renforcement discontinu, le renforcement pouvant être constitué à partir d'éléments (2) de fils ou de cablés textiles (y compris de verre) ou métalliques d'une longueur généralement inférieure à 20 millimètres et dispersés au sein de la matrice polyoléfinique (1).
La figure 3 est une coupe agrandie de la figure 2, dans la zone AA'. La coupe est opérée au niveau de trois éléments noyés dans la matrice polyoléfinique (1), les éléments de renforcement (2) étant enrobés, d'une couche, le plus généralement fine par rapport au diamètre de chaque fibre, d'une composition d'adhérisation (3) à base d'un polycondensat ternaire de résorcine, de formol et de latex élastomérique.

Comme il a été décrit précédemment, le renforcement continu peut se présenter sous forme de fils simples assemblés ou composés, de retors, de cables ou encore d'assemblage tels que des tricots ou des tissus de différentes textures.

Le renforcement discontinu est, lui, constitué d'éléments relativements courts (au plus quelques dizaines de millimètres), libres sous forme de fibres courtes dispersables, ou liés sous forme de feutre ou de nontissé.

Le renforcement peut être constitué de fibres naturelles comme la soie ou le coton, de fibres artificielles, comme la rayonne ou la fibranne, de fibres synthétiques telles que le polyamide, le polyester, l'aramide, l'alcool polyvinylique, le polyacrylonitrile ou encore la fibre de carbone.

Le renforcement peut être de nature minérale, comme le verre, par example des fibres de verre, ou organique comme l'une des fibres synthétiques citées ci-dessus. Il peut, également, être constitué par des câbles d'acier laitonné ou zingué, de grande longueur ou sous forme de tissus ou encore sous forme de fibres courtes.

Les traitements d'adhérisation sont, le plus généralement, réalisés à partir de dispersions ou de solutions, dans des solvants organiques, minéraux ou dans de l'eau, de résines telles que des époxies, des composés ternaires formophénoliques ou résorcine-formol comportant un latex élastomérique ou encore à partir de dissolutions ou à partir de mélanges à base de compositions élastomériques.

La polyoléfine de haute masse moléculaire destinée à l'enrobage du renforcement adhérisé est constituée, préférentiellement par des homopolymères d'éthylène ou de propylène, de masse moléculaire moyenne en poids au moins égale à 500.000, bien que l'emploi de copolymères semi-cristallins d'éthylène et de propylène puisse également être envisagé, sous réserve qu'ils présentent une masse moléculaire au moins égale à 500.000.

Enfin, la matrice est constituée, le plus généralement, par du polyéthylène, haute ou basse densité, linéaire ou ramifié, par du polypropylène, par les homologues supérieurs de polyoléfines ou par un de leurs copolymères semi-cristallins.

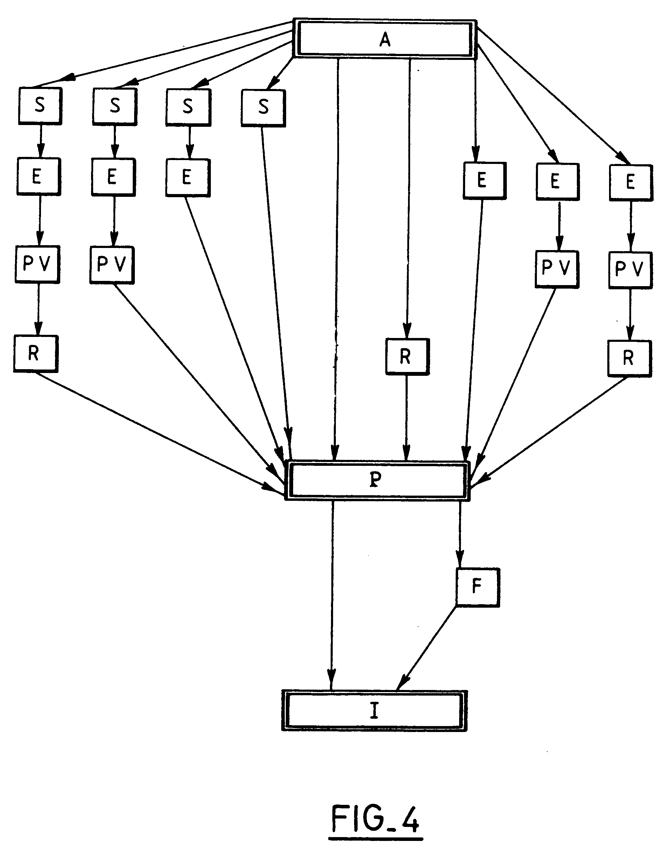

D'une manière générale, le procédé et les variantes qui permettent d'obtenir des composites conformes à l'invention se définissent par une combinaison de tout ou partie des opérations élémentaires schématisées sur la figure 4.

Il ne sera pas fait de distinction, au niveau des procédés, entre un renforcement continu ou discontinu, la découpe éventuelle de la fibre pour obtenir le renforcement discontinu en fibres courtes pouvant s'opérer à n'importe quel stade du traitement avant l'incorporation dans la matrice polyoléfinique. Les renforcements discontinus sous forme de feutre ou de nontissé se traitent comme des renforcements continus, sur le plan des procédés.

Les différentes opérations élémentaires, dont la combinaison totale ou partielle définit le procédé de réalisation d'un composite donné, sont résumées ci-après :
* On désignera par (A) le traitement d'adhérisation : il s'opère, préférentiellement, par imprégnation du renforcement par passage dans une composition d'adhérisation définie précédemment ou par l'enrobage du renforcement par la composition élastomérique soit sur un mélangeur à cylindres, soit par extrusion d'un revêtement sur le renforcement s'il s'agit de retors, de cables de tricot ou de ruban (tissu de faible largeur), ou encore par enduction pour les renforcement de largeur plus importante.
* Le traitement d'adhérisation (A) peut être suivi, mais non obligatoirement, par un traitement de séchage (S) permettant l'évaporation du solvant de la composition d'adhérisation et/ou la polymérisation, la polycondensation ou la vulcanisation - partielle ou totale - de la composition d'adhérisation, selon sa nature.
* Optionnellement, le traitement d'adhérisation (A), suivi ou non du séchage (S), peut être complété par une opération d'enrobage (E) de la fibre adhérisée par une composition élastomérique de formulation adaptée, destinée à renforcer l'adhérence entre les éléments constitutifs du composite.
   Cette opération se pratique selon différentes techniques :
   - il est possible, par exemple, d'imprégner le renforcement adhérisé par passage dans une composition élastomérique, ce qui est couramment pratiqé pour les renforcements continus;
   - il est possible de procéder à l'enrobage des retors, des cables et des tricots par extrusion de la composition élastomérique;
   - les tricots, les tissus, les feutres et les nontissés sont généralement enrobés de composition élastomérique par le procédé d'enduction;
   - une autre méthode, particulièrement adaptée aux renforcements utilisés sous forme d'enroulement filamentaire ou de nappes de confection, consiste à déposer, simplement une feuille de la composition élastomérique au dessous et au dessus du renforcement;
* si l'enrobage (E) est effectué, il peut - avantageusement mais non obligatoirement - être suvi d'une opération de pré-vulcanisation (PV) de la composition élastomérique, destinée à améliorer l'adhérence entre le renforcement adhérisé et la composition élastomérique. Les conditions dudit traitement thermique de pré-vulcanisation seront choisies de manière à ne provoquer qu'une vulcanisation partielle de la composition élastomérique dont la formulation pourra être adaptée, par exemple par incorporation d'additifs retardateurs de la vulcanisation, pour faciliter cette opération.
* une opération dite de ravivage superficiel (R) peut s'avérer utile - que les opérations d'enrobage par la couche supplémentaire de composition élastomérique et la vulcanisation partielle aient été ou non réalisées - pour faciliter le revêtement ultérieur du renforcement adhérisé par la polyoléfine de haute masse moléculaire.
   Il s'agit simplement d'une opération de réactivation de la surface du renforcement adhérisé par l'action d'un solvant passé avec une éponge ou un pinceau et que l'on laisse s'évaporer avant l'opération suivante.
* l'opération - essentielle dans l'invention - de revêtement du renforcement adhérisé par la polyoléfine de haute masse moléculaire (P), en fine couche, se fait, le plus généralement par l'une des deux techniques ci-dessous :
   - le traitement du renforcement par une dissolution de la polyoléfine de haute masse moléculaire dans un solvant approprié, de la décaline chaude par exemple, qui provoquera un léger gonflement de la couche d'adhérisation et le dépot - dont l'épaisseur variera en fonction de la vitesse de traitement, de la concentration de la solution, de l'essorage et autres paramètres du traitement - d'une fine couche de polyoléfine dissoute. Il suffira, alors de procéder à l'évaporation du solvant;
   ou
   - le passage du renforcement dans un lit fluidisé constitué par une suspension, dans un flux gazeux - le plus généralement d'air ou d'azote pour éviter l'oxydation de la polyoléfine - de grains de la polyoléfine de haute masse moléculaire. Il est avantageux de réaliser cette opération à une température de l'ordre de 80 à 100 °C pour faciliter l'adhérence des grains de polyoléfine sur le renforcement adhérisé.
      D'autres méthodes peuvent également être utilisées, comme par exemple, l'extrusion de la polyoléfine sur le renforcement, dans une extrudeuse. Il est cependant connu qu'il est difficile de procéder à l'extrusion des polyoléfines de haute masse moléculaire et que cette opération requiert des conditions de mise en oeuvre particulières.
* un traitement thermique (F) sera avantageusement appliqué au renforcement adhérisé enrobé de polyoléfine lorsque l'enrobage aura été pratiqué par la technique de lit fluidisé. Il consiste à porter le renforcement adhérisé enrobé de polyoléfine à une température proche de la température de fusion de la polyoléfine, soit aux environs de 135 °C pour le polyéthylène et 160 °C pour le polypropylène, ce qui permet de terminer la polycondensation, la polymérisation ou la vulcanisation de la composition d'adhérisation, au contact de la polyoléfine de haute masse moléculaire et de provoquer l'adhérence entre ces deux composants.
* l'incorporation finale (I) du renforcement adhérisé enrobé de polyoléfine de haute masse moléculaire dans la matrice polyoléfinique. Cette opération peut se faire par de nombreuses techniques, parmi lesquelles, les plus couramment utilisées sont :
   - l'extrusion d'une gaine de matrice polyoléfinique sur une fibre, un ruban ou un tricot constituant le renforcement,
   - l'enduction par la matrice polyoléfinique en solution du renforcement continu,
   - le calandrage, à chaud, entre cylindres, de la polyoléfine et du renforcement, continu ou discontinu,
   - le dépot d'un film, d'une feuille ou d'une plaque de la polyoléfine sur le renforcement déposé sous forme d'enroulement filamentaire, suivi d'un sanglage et d'un traitement thermique destinés à améliorer la pénétration du renforcement par la matrice polyoléfinique ou sur le renforcement déposé dans le fond d'un moule ou encore sur le renforcement déposé sur une forme de confection,
   ou
   - la pultrusion, technique devenue classique dans l'industrie de transformation des polymères.

La fibre à laquelle il a été, ainsi, conféré une affinité pour la matrice polyoléfinique et qui lui est alors incorporée constitue le composite semi-produit utilisable, le plus généralement, sous forme de feuilles ou qui peut être granulé afin d'être transformable par moulage, par extrusion, par injection ou par tout autre technique de transformation appropriée.

L'analyse de la figure 4 montre que, selon la nature du renforcement, le procédé se compose d'au moins trois opérations indispensables, - indiquées par un double encadrement - à savoir :
- adhérisation (A) du renforcement, par une composition d'adhérisation contenant un composé élastomérique,
- enrobage (P) du renforcement adhérisé par une polyoléfine de masse moléculaire élevée,
- incorporation (I) du renforcement adhérisé enrobé de polyoléfine de haute masse moléculaire dans la matrice polyoléfinique.

Les différents traitements schématisés sur la figure 4 comportent, du plus simple au plus complet l'un des ensembles ci-après :
- les opérations A - P - I, pour le traitement le plus simple,
- les opérations A - P - F - I,
- les opérations A - E - P - I,
- les opérations A - E - P - F - I,
- les opérations A - S - E - P - I,
- les opérations A - S - E - P - F - I,
- les opérations A - E - PV - P - I,
- les opérations A - E - PV - P - F - I,
- les opérations A - S - E - PV - P - I,
- les opérations A - S - E - PV - P - F - I,
- les opérations A - E - PV - R - P - I,
- les opérations A - E - PV - R - P - F - I,
- les opérations A - S - E - PV - R - P - I,
ou
- les opérations A - S - E - PV - R - P - F - I, pour le traitement le plus complet.

Pour illustrer l'invention, il sera donné ci-après, à titres d'exemples non limitatifs, quelques constitutions de composites, réalisables à partir de matériaux et de techniques connus, ainsi que des exemples de procédés permettant de les obtenir.

Pour les compositions, seront indiquées la nature et la forme du renforcement, la nature de la couche d'adhérisation et, éventuellement de la couche d'enrobage supplémentaire par une composition élastomérique, étant entendu que, dans tous les cas, le renforcement adhérisé est enrobé d'une couche fine de polyoléfine de haute masse moléculaire et est inclus dans une matrice polyoléfinique, la nature de ces polyoléfines étant indiquée sans précision supplémentaire.

La composition C1 définit un exemple de constitution d'un composite à renforcement continu :
- le renforcement est constitué d'une fibre artificielle, la rayonne, utilisée sous forme de retors;
- la couche d'adhérisation est réalisée à partir d'une composition ternaire de résorcine, de formol et de latex de SBR, composition classique dans les techniques d'adhérisation utilisées dans l'industrie de transformation des caoutchoucs;
- la polyoléfine de haute masse moléculaire est du polyéthylène;
- la polyoléfine de la matrice est du polypropylène.

Le procédé P1 définit l'ensemble des traitements appliqués au renforcement à base de retors de rayonne pour obtenir un composite conforme à la composition C1.

Il se définit par la succession, dans l'ordre énoncé, des opérations suivantes :
- adhérisation des retors de rayonne par passage en continu à travers une dispersion aqueuse de la composition d'adhérisation,
- traitement thermique provoquant la polycondensation partielle de la composition d'adhérisation,
- absence de ravivage,
- enrobage par passage dans une solution de polyéthylène de haute masse moléculaire (Hostalène GUR de HOECHST), à 5 % dans la décaline, à 140 °C, environ,
- dépot d'un film de polypropylène sur une forme de confection,
- enroulement filamentaire sur la forme de confection, du renforcement adhérisé,
- dépot d'un nouveau film de polypropylène,
- traitement thermique à 150 °C, après sanglage, pour assurer la cohésion des éléments constitutifs,
La composition C2 définit un autre exemple de constitution d'un composite à renforcement continu :
- le renforcement est constitué d'une fibre artificielle, la rayonne, utilisée sous forme de tissu;
- la couche d'adhérisation est réalisée à partir d'une composition ternaire de résorcine, de formol et de latex de vinylpyridine,
- une couche fine de composition élastomérique à base de SBR est appliquée sur la composition d'adhérisation,
- la polyoléfine de haute masse moléculaire est du polyéthylène;
- la polyoléfine de la matrice est du polyéthylène linéaire, basse densité, d'indice de fluidité égal à 5.

Le procédé P2 définit l'ensemble des traitements appliqués au tissu de rayonne pour obtenir un composite conforme à la composition C2.

Il se définit par la succession, dans l'ordre énoncé, des opérations suivantes :
- adhérisation du tissu de rayonne, par passage dans une dispersion aqueuse de la composition d'adhérisation,
- dépot d'un film de 0,05 millimètres d'épaisseur de polyéthylène de haute masse moléculaire sur un mandrin de confection,
- dépot, sur le mandrin, par dessus le film de polyéthylène de haute masse moléculaire, d'une feuille de la composition élastomérique à base SBR,
- ravivage,
- enroulement du tissu adhérisé sur le mandrin, au dessus de la feuille de composition élastomérique,
- dépot, sur le tissu adhérisé, d'une feuille de la composition élastomérique à base de SBR,
- ravivage,
- dépot d'un nouveau film de polyéthylène de haute masse moléculaire,
- traitement thermique destiné à assurer la cohésion des éléments constitutifs,
- séparation de l'ensemble du mandrin,
- dépot, sur les deux faces, d'un film de polyéthylène linéaire, basse densité, d'indice de fluidité égal à 5, pour constituer la matrice.

La composition C3 définit un exemple de constitution d'un composite à renforcement continu :
- le renforcement est constitué d'une fibre synthétique, à base de polyester, utilisée sous forme de retors;
- la couche d'adhérisation est réalisée à partir d'une composition ternaire de résorcine, de formol et de latex de vinyl pyridine;
- la polyoléfine de haute masse moléculaire est du polypropylène;
- la polyoléfine de la matrice est du polypropylène.

Le procédé P3 définit l'ensemble des traitements appliqués au renforcement à base de polyester pour obtenir un composite conforme à la composition C3.

Il se définit par la succession, dans l'ordre énoncé, des opérations suivantes :
- adhérisation du polyester, par passage dans une dispersion aqueuse de la composition d'adhérisation,
- traitement thermique provoquant la polycondensation partielle de la composition d'adhérisation,
- ravivage,
- enrobage par passage dans un lit fluidisé de polypropylène de haute masse moléculaire,
- extrusion d'une gaine de polypropylène, sur le renforcement.

La composition C4 définit un exemple de constitution d'un composite à renforcement continu :
- le renforcement est constitué d'une fibre synthétique à haut module, une polyamide aromatique - ou aramide -, (Kevlar 29 de DUPONT DE NEMOURS), utilisée sous forme de tissu;
- la couche d'adhérisation est réalisée à partir d'une composition ternaire de résorcine, de formol et de latex de vinyl pyridine;
- une couche d'enrobage supplémentaire est constituée d'une composition élastomérique à base de terpolymère d'éthylène et de propylène, dit caoutchouc EPDM;
- la polyoléfine de haute masse moléculaire est du polyéthylène;
- la polyoléfine de la matrice est du polyéthylène haute densité, d'indice de fluidité égal à 3.

Le procédé P4 définit l'ensemble des traitements appliqués au renforcement à base d'aramide pour obtenir un composite conforme à la composition C4.

Il se définit par la succession, dans l'ordre énoncé, des opérations suivantes :
- adhérisation du renforcement, par passage dans une dispersion aqueuse de la composition d'adhérisation,
- traitement thermique provoquant la polycondensation partielle de la composition d'adhérisation,
- absence de ravivage,
- dépot d'une couche supplémentaire d'enrobage constitué par une composition élastomérique à base de caoutchouc EPDM, par le procédé d'enduction,
- traitement thermique de pré-vulcanisation destiné à améliorer l'adhérence entre la couche d'adhérisation et l'enrobage par la composition élastomérique,
- ravivage,
- enrobage par passage dans une solution de polyéthylène de haute masse moléculaire (Hostalène GUR de HOECHST), à 5 % dans la décaline, à 140 °C, environ,
- incorporation dans la matrice par dépot d'une feuille de polyéthylène au dessus et au dessous du renforcement adhérisé enrobé de polyoléfine et d'élastomère,
- traitement thermique à une température de 145 °C, pour assurer la cohésion des éléments constitutifs.

La composition C5 définit un exemple de constitution d'un composite à renforcement continu :
- le renforcement est constitué d'une fibre synthétique, un polyamide 6-6, utilisée sous forme de retors;
- la couche d'adhérisation est réalisée à partir d'une composition élastomérique, à base de caoutchouc naturel, de formulation adaptée, c'est-à-dire incluant des promoteurs d'adhérence, selon une technique connue, dite formulation HRH,
- la polyoléfine de haute masse moléculaire est du polyéthylène;
- la polyoléfine de la matrice est du polyéthylène linéaire, basse densité, d'indice de fluidité égal à 5.

Le procédé P5 définit l'ensemble des traitements appliqués au renforcement à base de polyamide pour obtenir un composite conforme à la composition C5.

Il se définit par la succession, dans l'ordre énoncé, des opérations suivantes :
- adhérisation du renforcement, par passage dans une solution de la composition d'adhérisation élastomérique,
- traitement thermique de pré-vulcanisation destiné à améliorer l'adhérence entre la couche d'adhérisation et l'enrobage par la composition élastomérique,
- enrobage par extrusion d'une gaine de faible épaisseur de polyéthylène de haute masse moléculaire (Hostalène GUR de HOECHST),
- incorporation dans la matrice par extrusion d'une gaine de polyéthylène.

La composition C6 définit un exemple de constitution d'un composite à renforcement continu :
- le renforcement est constitué d'une fibre minérale, la fibre de verre, utilisée sous forme de tissu;
- la couche d'adhérisation est réalisée par le fournisseur de la fibre, en vue de l'adhérence sur caoutchouc;
- une couche de composition élastomérique à base de caoutchouc EPDM est ajoutée;
- la polyoléfine de haute masse moléculaire est du polyéthylène,
- la polyoléfine de la matrice est du polyéthylène basse densité, d'indice de fluidité égal à 6.

Le procédé P6 définit l'ensemble des traitements appliqués au renforcement à base de tissu de verre pour obtenir un composite conforme à la composition C6.

Il se définit par la succession, dans l'ordre énoncé, des opérations suivantes :
- dépot d'une couche d'enrobage constitué par une composition élastomérique à base de caoutchouc EPDM, par enduction,
- traitement thermique de pré-vulcanisation destiné à améliorer l'adhérence entre la couche d'adhérisation et l'enrobage par la composition élastomérique.
- enrobage par passage dans une solution de polyéthylène de haute masse moléculaire (Hostalène GUR de HOECHST), à 5 % dans la décaline, à 140 °C,
- incorporation dans la matrice polyéthylène par calandrage du renforcement adhérisé et enrobé d'élastomère et de polyoléfine.

La composition C7 définit un exemple de constitution d'un composite à renforcement continu :
- le renforcement est constitué de câbles métalliques fins, en acier, recouverts d'une fine couche de laiton, fabriqués par BEKAERT et utilisés sous forme de câbles,
- la couche d'adhérisation est réalisée à partir d'une dissolution de composition élastomérique de formulation adaptée, c'est-à-dire, selon une technique connue, comportant des sels de cobalt agissant comme promotteurs d'adhésion,
- la polyoléfine de haute masse moléculaire est du polyéthylène;
- la polyoléfine de la matrice est du polyéthylène haute densité, d'indice de fluidité égal à 0,5.

Le procédé P7 définit l'ensemble des traitements appliqués au renforcement à base de cables métalliques laitonnés pour obtenir un composite conforme à la composition C7.

Il se définit par la succession, dans l'ordre énoncé, des opérations suivantes :
- adhérisation du renforcement, par passage dans une solution de la composition d'adhérisation,
- traitement thermique provoquant la vulcanisation partielle de la composition d'adhérisation,
- ravivage,
- enrobage par passage dans un lit fluidisé de polyéthylène de haute masse moléculaire (Hostalène GUR de HOECHST),
- traitement thermique destiné à assurer la cohésion des composants.
- incorporation dans la matrice par extrusion d'une gaine de polyéthylène autour du cable adhérisé enrobé de polyoléfine.

La composition C8 définit un exemple de constitution d'un composite à renforcement continu :
- le renforcement est constitué de câbles métalliques fins, en acier, recouverts d'une fine couche de laiton, fabriqués par BEKAERT et utilisés sous forme de tissu,
- la couche d'adhérisation est réalisée à partir d'une dissolution de composition élastomérique de formulation adaptée, c'est-à-dire, selon une technique connue, comportant des sels de cobalt agissant comme promotteurs d'adhésion,
- la polyoléfine de haute masse moléculaire est du polypropylène;
- la polyoléfine de la matrice est du polypropylène.

Le procédé P8 définit l'ensemble des traitements appliqués au renforcement à base de tissu de cables métalliques laitonnés pour obtenir un composite conforme à la composition C8.

Il se définit par la succession, dans l'ordre énoncé, des opérations suivantes :
- adhérisation du renforcement, par enduction par la composition d'adhérisation,
- traitement thermique provoquant la vulcanisation partielle de la composition d'adhérisation,
- ravivage,
- enrobage par fluidisation, dans une suspension dans l'azote, de polypropylène de haute masse moléculaire,
- traitement thermique destiné à assurer la cohésion des composants,
- incorporation dans la matrice par calandrage, sous forme de sandwich du renforcement adhérisé entre deux plaques de polypropylène,
- traitement thermique à une température de 155 °C, pour assurer la cohésion des éléments constitutifs.

La composition C9 définit un exemple de constitution d'un composite à renforcement discontinu :
- le renforcement est constitué d'une fibre artificielle courte, la fibranne,
- la couche d'adhérisation est réalisée à partir d'une composition ternaire de résorcine, de formol et de latex de SBR,
- la polyoléfine de haute masse moléculaire est du polypropylène;
- la polyoléfine de la matrice est du polypropylène.

Le procédé P9 définit l'ensemble des traitements appliqués au renforcement à base de fibranne pour obtenir un composite conforme à la composition C9.

Il se définit par la succession, dans l'ordre énoncé, des opérations suivantes :
- adhérisation du renforcement, par imprégnation, sous agitation, dans une solution aqueuse de la composition d'adhérisation,
- enrobage par traitement dans une solution de polypropylène de haute masse moléculaire,
- incorporation dans la matrice sur mélangeur à cylindres, ce qui crée un composite présentant une anisotropie en raison de l'orientation des fibres, longitudinalement, au cours de l'opération de calandrage.

La composition C10 définit un exemple de constitution d'un composite à renforcement discontinu :
- le renforcement est constitué d'une fibre synthétique, le polyester, utilisée sous forme de fibres courtes;
- la couche d'adhérisation est réalisée à partir d'une composition ternaire de résorcine, de formol et de latex de SBR;
- la polyoléfine de haute masse moléculaire est du polyéthylène;
- la polyoléfine de la matrice est du polyéthylène haute densité, d'indice de fluidité égal à 8.

Le procédé P10 définit l'ensemble des traitements appliqués au renforcement à base de fibres courtes de polyester pour obtenir un composite conforme à la composition C10.

Il se définit par la succession, dans l'ordre énoncé, des opérations suivantes :
- adhérisation du renforcement, par passage dans une dispersion aqueuse de la composition d'adhérisation,
- traitement thermique provoquant la polycondensation partielle de la composition d'adhérisation,
- absence de ravivage,
- dépot d'une couche supplémentaire d'enrobage constitué par une composition élastomérique à base de caoutchouc SBR, sur mélangeur à cylindres et découpe en bandes du revêtement adhérisé enrobé d'élastomère,
- enrobage par passage dans une solution de polyéthylène de haute masse moléculaire (Hostalène GUR de HOECHST), dans la décaline,
- découpe de la fibre en éléments de longueur au plus égale à quelques dizaines de millimètres.
- incorporation dans la matrice par mélangeage dans un mélangeur interne du revêtement adhérisé enrobé d'élastomère et de polyoléfine et de polyéthylène haute densité, d'indice de fluidité égal à 8,
- traitement thermique à une température de 135 °C, pour assurer la cohésion des éléments constitutifs.

La composition C11 définit un exemple de constitution d'un composite à renforcement discontinu :
- le renforcement est constitué d'une fibre synthétique à haut module, polyamide aromatique - ou aramide -, (Twaron, d'ENKA);
- la couche d'adhérisation est réalisée à partir d'une composition de résine époxy et de 15 % en poids sec de latex de vinyl pyridine;
- la couche supplémentaire d'enrobage est constituée d'une composition élastomérique à base de caoutchouc EPDM;
- la polyoléfine de haute masse moléculaire est du polyéthylène;
- la polyoléfine de la matrice est du polyéthylène linéaire, basse densité, d'indice de fluidité égal à 5.

Le procédé P11 définit l'ensemble des traitements appliqués au renforcement à base de fibres courtes d'aramide pour obtenir un composite conforme à la composition C11.

Il se définit par la succession, dans l'ordre énoncé, des opérations suivantes :
- adhérisation du renforcement, par passage dans une dispersion aqueuse de la composition d'adhérisation,
- dépot d'une couche supplémentaire d'enrobage constitué par une composition élastomérique à base de caoutchouc EPDM, par extrusion de ladite composition élastomérique sur la fibre non encore découpée,
- enrobage par passage dans une solution de polyéthylène de haute masse moléculaire (Hostalène GUR de HOECHST), à 5 % dans la décaline, à 140 °C, environ,
- découpe de la fibre en éléments de longueur au plus égale à quelques dizaines de millimètres,
- incorporation dans la matrice par mélangeage sur mélangeur à cylindres, ce qui conduit à l'obtention d'un composite anisotrope.

La composition C12 définit un exemple de constitution d'un composite à renforcement discontinu :
- le renforcement est constitué d'une fibre minérale, la fibre de verre, utilisée sous forme de fibres courtes;
- la couche d'adhérisation est réalisée à partir d'une composition ternaire de résorcine, de formol et de latex de vinyl pyridine;
- la polyoléfine de haute masse moléculaire est du polyéthylène;
- la polyoléfine de la matrice est du polyéthylène linéaire, haute densité, d'indice de fluidité égal à 5.

Le procédé P12 définit l'ensemble des traitements appliqués au renforcement à base de fibres courtes de verre pour obtenir un composite conforme à la composition C12.

Il se définit par la succession, dans l'ordre ennoncé, des opérations suivantes :
- adhérisation du renforcement, par imprégnation de la fibre dans une dispersion aqueuse de la composition d'adhérisation,
- enrobage par passage dans une solution de polyéthylène de haute masse moléculaire (Hostalène GUR de HOECHST), à 5 % dans la décaline, à 140 °C,
- découpe en fibres courtes de 5 millimètres de longueur,
- incorporation dans la matrice, sous forme de poudre,
- extrusion du matériau composite et granulation en vue de transformations ultérieures pour la réalisation de produits finis.

Sur les différentes compositions C1 à C12 précédemment définies ont été réalisés des essais d'adhérence du renforcement à la matrice, soit sous forme de cylindres moulés de composite autour d'un renforcement constitué de retors ou de cables, soit sous forme d'éprouvette dite "pantalon" pour les renforcements sous forme de tissu, la séparation étant alors recherchée entre le tissu et la matrice. Pour les composites à renforcement discontinu, c'est la contrainte de démouillage qui a été mesurée.

Ces mesures d'adhérence ou de démouillage ont été opérées sur les composites objets de l'invention comparativement à des échantillons témoins, de même composition à l'exception de l'enrobage par la polyoléfine de haute masse moléculaire.

Comme il était prévisible, aucune valeur d'adhérence n'a pu être mesurée sur les compositions à renforcement par retors ou par cables des compositions C1, C3, C5 et C7, la valeur relevée étant celle de la déchéance de la matrice. Sur les témoins correspondants, la valeur de l'adhérence entre le renforcement et la matrice était de quelques MPa, correspondant à la participation du module de la matrice à l'effort de traction exercé sur le renforcement.

Il en est de même en ce qui concerne les compositions comportant un renforcement continu, sous forme de tissu, telles que C2, C4, C6 et C8. Les valeurs mesurées représentent la déchirure ou la rupture de la matrice polyoléfinique, la liaison adhésive entre la matrice et le renforcement n'ayant jamais pu être déterminée.

En ce qui concerne les compositions à renforcement discontinu, la force de démouillage mesurée était, dans tous les cas supérieure à 12 MPa sur les compositions C9 à C12, alors qu'elle était très inférieure à 1 MPa sur les échantillons témoins, réalisés sans enrobage par la polyoléfine de haute masse moléculaire du revêtement adhérisé.

Ces résultats montrent que, par l'intermédiaire d'un enrobage de polyoléfine de haute masse moléculaire, il est possible de créer une liaison intime entre un renforcement enrobé par une composition d'adhérisation comportant un élastomère et une matrice polyoléfinique de masse moléculaire quelconque grâce à l'interposition entre ledit renforcement adhérisé et la matrice polyoléfinique d'une couche de faible épaisseur d'une polyoléfine de haute masse moléculaire.

L'invention permet donc de réaliser des composites à matrices peu coûteuses grâce à l'emploi de matériaux polyoléfiniques de grande consommation, ce qui n'était pas possible sans modification chimique de la polyoléfine. Ces composites sont, de plus, faciles à mettre en oeuvre par les techniques conventionnelles de l'industrie de transformation des polymères. Ils présentent des propriétés mécaniques élevées grâce à la présence du renforcement et, en particulier, un fluage sous charge très limité du fait de la liaison intime entre le renforcement et la matrice.

L'homme de l'art peut, bien entendu, apporter au matériau composite, au procédé de sa réalisation ainsi qu'à leurs variantes, décrits et illustrés à titre d'exemples non limitatifs, diverses modifications - en particulier dans la nature des fibres et dans les traitements d'adhérisation, d'enrobage et d'incorporation du renforcement adhérisé et enrobé de polyoléfine dans la matrice - sans sortir du cadre de l'invention.

## Revendications

1. Matériau composite formé d'une matrice (1) constituée d'une polyoléfine de masse moléculaire quelconque, telle que du polyéthylène haute ou basse densité, linéaire ou ramifié, du polypropylène, un homologue supérieur de polyoléfine ou un de leurs copolymères semi-cristallins et un renforcement (2) constitué de matériaux textiles naturels, artificiels ou synthétiques, ou de matériaux métalliques, sous forme continue telle que des retors, des câbles, du tricot ou du tissu, ou sous forme discontinue telle que des fibres courtes, du feutre ou du nontissé, et enrobé d'au moins une couche d'adhérisation (3) dont l'une au moins comporte un composant élastomèrique, ledit matériau composite étant caractérisé en ce qu'une liaison intime est assurée - entre la matrice polyoléfinique (1) et le renforcement (2) adhérisé - par l'intermédiaire d'un enrobage (5), de faible épaisseur, du renforcement adhérisé par une polyoléfine, telle que du polyéthylène ou du polypropylène, de masse moléculaire moyenne en poids au moins égale à 500.000.

2. Matériau composite selon la revendication 1, caractérisé en ce que la couche d'adhérisation du renforcement (2) est constituée de résine polycondensable telle que de l'époxy, un composé formophénolique ou un condensat résorcine-formol et d'un latex élastomérique.

3. Matériau composite selon la revendication 1, caractérisé en ce que la couche d'adhérisation du renforcement (2) est constituée d'une couche de résine polycondensable telle que de l'époxy, un composé formophénolique ou un condensat résorcine-formol et d'une couche faite d'un enrobage, de faible épaisseur, par une composition élastomérique.

4. Matériau composite selon l'une des revendications 1 à 3, caractérisé en ce que la polyoléfine utilisée pour l'enrobage (5) du renforcement (2) adhérisé est constitué de polyéthylène de masse moléculaire moyenne en poids au moins égale à 500.000, la matrice étant constituée, indifféremment de polyéthylène, de polypropylène, ou de l'un des homologues supérieurs de polyoléfines ou encore d'un de leurs copolymères semi-cristallins.

5. Matériau composite selon l'une des revendications 1 à 3, caractérisé en ce que la polyoléfine utilisée pour l'enrobage (5) du renforcement (2) adhérisé est constitué de polypropylène de masse moléculaire moyenne en poids au moins égale à 500.000, la matrice étant constituée, indifféremment de polyéthylène, de polypropylène, ou de l'un des homologues supérieurs de polyoléfines ou encore d'un de leurs copolymères semi-cristallins.

6. Matériau composite selon l'une des revendications 1 à 5, caractérisé en ce que le renforcement (2), continu ou discontinu, est constitué de fibres synthétiques telles que du polyamide, du polyamide aromatique, du polyester, de l'alcool polyvinylique, du polyacrylonitrile ou encore de la fibre de carbone.

7. Matériau composite selon l'une des revendications 1 à 5, caractérisé en ce que le renforcement (2) est constitué de fibres artificielles continues telles que de la rayonne ou discontinues telles que de la fibranne.

8. Matériau composite selon l'une des revendications 1 à 5, caractérisé en ce que le renforcement (2), continu ou discontinu, est constitué de fibres de verre.

9. Matériau composite selon l'une des revendications 1 à 5, caractérisé en ce que le renforcement (2), continu ou discontinu, est constitué de câbles d'acier laitonné.

10. Matériau composite selon l'une des revendications 1 à 5, caractérisé en ce que le renforcement (2) est constitué de fibres naturelles continues telles que de la soie ou discontinues telles que du coton.

11. Procédé de réalisation d'un composite conforme à l'une des revendications 1 à 10, dont le renforcement (2) a reçu, avant incorporation dans la matrice, une composition d'adhérisation comportant au moins un composant élastomérique, caractérisé en ce que ladite composition d'adhérisation est revêtue, au cours d'un traitement thermique, par une polyoléfine, telle que du polyéthylène ou du polypropylène de masse moléculaire moyenne en poids au moins égale à 500.000, par passage dans une dissolution de ladite polyoléfine de haute masse moléculaire dans un solvant approprié tel que la décaline.

12. Procédé de réalisation d'un composite conforme à l'une des revendications 1 à 10, dont le renforcement (2) a reçu, avant incorporation dans la matrice, une composition d'adhérisation comportant au moins un composant élastomérique, caractérisé en ce que ladite composition d'adhérisation est revêtue, au cours d'un traitement thermique, par une polyoléfine, telle que du polyéthylène ou du polypropylène de masse moléculaire moyenne en poids au moins égale à 500.000, par passage dans un lit fluidisé constitué par une suspension des particules de ladite polyoléfine de haute masse moléculaire dans un flux gazeux tel que de l'air ou de l'azote.

## Claims

1. A composite material formed of a matrix (1) composed of a polyolefin of any molecular weight, such as high or low density polyethylene, either linear or branched, polypropylene, a higher homologue of a polyolefin or one of their semi-crystalline copolymers, and of a reinforcement (2) composed of natural, artificial or synthetic textiles, or metallic material, either continuous, as cords, cables, knitting or cloth, or discontinuous, as short fibres, felt or non woven material, coated with at least one bonding layer (3), one of which comprises an elastomeric component, said composite material bed characterised in that an intimate bond between the polyolefinic matrix (1) and the coated reinforcement (2) is obtained by a thin coating layer (5) of the coated reinforcement composed of a polyolefin, such as polyethylene or polypropylene, having a weight average molecular weight of at least 500,000.

2. A composite material according to claim 1, characterised in that the bonding layer of the reinforcement (2) is composed of a thermosetting resin, such as an epoxy, a formophenolic compound or a condensate of resorcinol and formal, and of an elastomeric latex.

3. A composite material according to claim 1 characterised in that the bonding layer of the reinforcement (2) is composed of a thermosetting resin such as an epoxy, a formophenolic compound or a condensate of resorcinol and formal, and of a thin layer of an elastomeric compound.

4. A composite material according to claims 1 to 3 characterised in that the polyolefin of the coating layer (5) of the coated reinforcement (2) is composed of polyethylene having a weight average molecular weight of at least 500,000, the matrix being composed of polyethylene, polypropylene, or one of the higher homologues of polyolefin, or one of their semi-crystalline copolymers.

5. A composite material according to claims 1 to 3 characterised in that the polyolefin of the coating layer (5) of the coated reinforcement (2) is composed of polypropylene having a weight average molecular weight of at least 500,000, the matrix being composed of polyethylene, polypropylene, or one of the higher homologues of polyolefin, or one of their semi-crystalline copolymers.

6. A composite material according to claims 1 to 5 characterised in that the reinforcement (2), either continuous or discontinuous, is composed of synthetic fibres such as polyamide, aromatic polyamide, polyester, polyvinyl alcohol, polyacrylonitrile or carbon fibers

7. A composite material according to claims 1 to 5 characterised in that the reinforcement (2) is composed of continuous artificial fibers such as rayon or discontinuous fibers such as rayon short fibers.

8. A composite material according to claims 1 to 5 characterised in that the reinforcement (2), either continuous or discontinuous, is composed of glass fibre.

9. A composite material according to claims 1 to 5 characterised in that the reinforcement (2), either continuous or discontinuous, is composed of steel cables.

10. A composite material according to claims 1 to 5 characterised in that the reinforcement (2) is composed of continuous natural fibers such as silk or discontinuous fibers such as cotton.

11. A process for the manufacture of a composite material composed according to one of claims 1 to 10, the reinforcement (2) of which having been coated with a bonding composition comprising at least one elastomeric compound before being embedded in the matrix, characterised in that said bonding composition is laid during thermal treatment by a polyolefin, such as polyethylene or polypropylene having a weight average molecular weight of at least 500,000, by passing in a solution of said high molecular weight polyolefin in a convenient solvent such as decalin.

12. A process for the manufacture of a composite material composed according to one of claims 1 to 10, the reinforcement (2) of which having been coated with a bonding composition comprising at least one elastomeric compound before being embedded in the matrix, characterised in that said bonding composition is laid during thermal treatment by a polyolefin, such as polyethylene or polypropylene having a weight average molecular weight of at least 500,000, by passing in a fluidised bed composed of a suspension of the particles of said high molecular weight polyolefin in a gaseous flow such as air or nitrogen.

## Patentansprüche

1. Verbundwerkstoff, bestehend aus einer Matrix (1) aus einem Polyolefin beliebiger molarer Masse, wie lineares oder verzweigtes Polyethylen hoher oder niedriger Dichte, Polypropylen, ein höheres Homolog der Polyolefinreihe oder eines ihrer halbkristallinen Mischpolymerisate, und einer Verstärkung (2) aus textilen Natur-, Kunst- bzw. Synthesematerialien oder metallischen Materialien in endloser Form, wie Zwirne, Kabel, Gestricke bzw. Gewebe, oder in diskontinuierlicher Form, wie Kurzfasern, Filz bzw. Vlies, mit mindestens einer Haftschicht (3), wovon mindestens eine einen elastomeren Bestandteil aufweist, wobei der genannte Verbundwerkstoff dadurch gekennzeichnet ist, daß eine innige Bindung zwischen der Polyolefinmatrix (1) und der damit fest verbundenen Verstärkung (2) gesichert wird, wobei diese durch eine Ummantelung (5) geringer Dicke der genannten Verstärkung mittels eines Polyolefins, wie Polyethylen bzw. Polypropylen eines gewichtsmittleren Molekulargewichts von mindestens 500.000, erfolgt.

2. Verbundwerkstoff nach Anspruch 1, dadurch gekennzeichnet, daß die Haftschicht der Verstärkung (2) aus einem polykondensierbaren Harz, wie Epoxid, einer Formol-Phenol-Verbindung oder einem Resorcin-Formol-Kondensat und einem elastomeren Latex besteht.

3. Verbundwerkstoff nach Anspruch 1, dadurch gekennzeichnet, daß die Haftschicht der Verstärkung (2) aus einem polykondensierbaren Harz, wie Epoxid, einer Formol-Phenol-Verbindung oder einem Resorcin-Formol-Kondensat und einer Ummantelungsschicht geringer Dicke besteht, die aus einer elastomeren Mischung besteht.

4. Verbundwerkstoff nach einem der Ansprüche 1 bis 3, dadurch gekennzeichnet, daß das für die Ummantelung (5) der mit der Matrix (1) fest verbundenen Verstärkung (2) verwendete Polyolefin aus Polyethylen eines gewichtsmittleren Molekulargewichts von mindestens 500.000 besteht, wobei die Matrix unterschiedslos aus Polyethylen, Polypropylen, einem höheren Homolog der Polyolefinreihe oder einem ihrer halbkristallinen Mischpolymerisate besteht.

5. Verbundwerkstoff nach einem der Ansprüche 1 bis 3, dadurch gekennzeichnet, daß das für die Ummantelung (5) der mit der Matrix (1) fest verbundenen Verstärkung (2) verwendete Polyolefin aus Polypropylen eines gewichtsmittleren Molekulargewichts von mindestens 500.000 besteht, wobei die Matrix unterschiedslos aus Polyethylen, Polypropylen, einem höheren Homolog der Polyolefinreihe oder einem ihrer halbkristallinen Mischpolymerisate besteht.

6. Verbundwerkstoff nach einem der Ansprüche 1 bis 5, dadurch gekennzeichnet, daß die endlose bzw. diskontinuierliche Verstärkung (2) aus synthetischen Fasern, wie Polyamid, aromatischem Polyamid, Polyester, Polyvinylalkohol, Polyacrylnitril oder Kohlenstoffasern, besteht.

7. Verbundwerkstoff nach einem der Ansprüche 1 bis 5, dadurch gekennzeichnet, daß die Verstärkung (2) aus endlosen Kunstfasern, wie Reyon, oder diskontinuierlichen Kunstfasern, wie Zellwolle, besteht.

8. Verbundwerkstoff nach einem der Ansprüche 1 bis 5, dadurch gekennzeichnet, daß die endlose bzw. diskontinuierliche Verstärkung (2) aus Glasfasern besteht.

9. Verbundwerkstoff nach einem der Ansprüche 1 bis 5, dadurch gekennzeichnet, daß die endlose bzw. diskontinuierliche Verstärkung (2) aus vermessingten Stahlkabeln besteht.

10. Verbundwerkstoff nach einem der Ansprüche 1 bis 5, dadurch gekennzeichnet, daß die Verstärkung (2) aus endlosen Naturfasern, wie Seide, oder diskontinuierlichen Naturfasern, wie Baumwolle, besteht.

11. Verfahren zur Herstellung eines Verbundwerkstoffes nach einem der Ansprüche 1 bis 10, dessen Verstärkung (2) vor ihrer Einbringung in die Matrix mit einer Haftmischung aus mindestens einem elastomeren Bestandteil versehen wird, dadurch gekennzeichnet, daß die Haftmischung im Verlauf einer thermischen Behandlung mit einem Polyolefin, wie Polyethylen oder Polypropylen eines gewichtsmittleren Molekulargewichts von mindestens 500.000 beschichtet wird, und zwar durch Passieren in dem in einem geeigneten Lösungsmittel, wie Dekalin, aufgelösten Polyolefin hohen Molekulargewichts.

12. Verfahren zur Herstellung eines Verbundwerkstoffes nach einem der Ansprüche 1 bis 10, dessen Verstärkung (2) vor ihrer Einbringung in die Matrix mit einer Haftmischung aus mindestens einem elastomeren Bestandteil versehen wird, dadurch gekennzeichnet, daß die Haftmischung im Verlauf einer thermischen Behandlung mit einem Polyolefin, wie Polyethylen oder Polypropylen eines gewichtsmittleren Molekulargewichts von mindestens 500.000 beschichtet wird, und zwar durch Durchlaufen eines Fließbettes, das aus in einem Gasstrom, wie Luft oder Stickstoff, schwebenden Teilchen des Polyolefins hohen Molekulargewichts besteht.
